# EUROPEAN PATENT APPLICATION

(11) **EP 2 930 611 A1**
(43) Date of publication of application: **14.10.2015**
(21) Application number: 14808477.5
(22) Date of filing: 07.07.2014
(51) Int. Cl.: G06F 9/30

(54) **METHOD AND DEVICE FOR SWAPPING DATA INTO MEMORY**

(30) Priority: 20.12.2013 CN 201310714405
(71) Applicant: Huawei Technologies Co., Ltd., Longgang District Shenzhen, Guangdong 518129 (CN)
(72) Inventor: WANG, Liangwang, Shenzhen Guangdong 518129 (CN)
(74) Representative: Pfenning, Meinig & Partner GbR
(86) International application number: PCT/CN2014/081759
(87) International publication number: WO 2015/090043

(57) **Abstract**

The present invention discloses a method and an apparatus for swapping in data to a memory, which implements a process of swapping in all data, in a swap partition of an operating system, of a determined process to a physical memory of the operating system. The method includes: determining, according to a received instruction command, a process in which data needs to be swapped in to a physical memory of an operating system; and swapping in all data, in a swap partition of the operating system, of at least one process of the determined processes to the physical memory of the operating system according to a current free memory capacity of the physical memory of the operating system. According to embodiments of the present invention, data that needs to be swapped in to a physical memory of an operating system and corresponds to at least one process can be actively swapped in to the physical memory at a time according to a user requirement. Because compared to the swap partition, a speed of performing read and write operations on data in the physical memory is much higher, a running speed of the process is effectively increased, and so a running speed of the operating system is also increased.

## Description

This application claims priority to Chinese Patent Application No. 201310714405.7, filed with the Chinese Patent Office on December 20, 2013 and entitled "METHOD AND APPARATUS FOR SWAPPING IN DATA TO MEMORY", which is incorporated herein by reference in its entirety.

### TECHNICAL FIELD

The present invention relates to the field of memory management technologies, and in particular, to a method and an apparatus for swapping in data to a memory.

### BACKGROUND

In each operating system, such as a Linux operating system, because a capacity of a physical memory of the operating system is limited, a swap partition (which is generally a disk partition) is generally used to compensate for a limited physical memory of the operating system. When a case in which the physical memory is insufficient occurs, the operating system may write in-memory data that is not often used recently into the swap (swap) partition from the physical memory, and allocate the physical memory to another program for use, so as to meet a requirement for a physical memory in service peak hours.

However, after the service peak hours, there may be a relatively large free memory in the physical memory of the operating system. Generally, the operating system may not actively swap in data in the swap partition to the physical memory, but needs access of a process to trigger swap-in of the data in the swap partition to the physical memory. When data corresponding to an address accessed by the process is stored in the swap partition, the operating system may trigger a "page fault". In a process of processing the "page fault", the operating system may swap in, to the physical memory, data corresponding to a logical page (which is generally 4 k) on which the address accessed by the process is located. A speed of performing read and write operations on the disk partition is relatively low, and swap-in of the data in the swap partition corresponds to a disk read operation. Therefore, multiple times of swapping in data on one logical page to the physical memory may lead to relatively long waiting time of a process, which seriously hinders a running speed of the process, thereby causing an influence on a running speed of the operating system.

### SUMMARY

Embodiments of the present invention provide a method and an apparatus for swapping in data to a memory, which implements a process of swapping in all data, in a swap partition of an operating system, of a determined process to a physical memory of the operating system at a time, and effectively increases a running speed of the process, thereby increasing an overall running speed of the operating system.

A first aspect provides a method for swapping in data to a memory, where the method includes:
determining, according to a received instruction command, a process in which data needs to be swapped in to a physical memory of an operating system, where the instruction command carries at least one process identifier that is used to indicate the process in which data needs to be swapped in to the physical memory of the operating system; and
swapping in all data, in a swap partition of the operating system, of at least one process of the determined processes to the physical memory of the operating system according to a current free memory capacity of the physical memory of the operating system.

According to the method provided in the embodiments of the present invention, data, in a swap partition, of a process that needs to be accessed by a user can be actively swapped in to a physical memory at a time according to a user requirement. Because a speed of performing read and write operations on data in the physical memory is much higher than a speed of performing read and write operations on data in the swap partition, a running speed of the process is effectively increased, and so a running speed of an operating system is also increased.

With reference to the first aspect, in a first possible implementation manner, if it is determined that there is one process in which data needs to be swapped in to the physical memory of the operating system, swapping in all data, in the swap partition of the operating system, of the determined process to the physical memory of the operating system according to the current free memory capacity of the physical memory of the operating system includes:
when it is determined that a data volume, in the swap partition of the operating system, of the determined process is not larger than the current free memory capacity of the physical memory of the operating system, swapping in all the data, in the swap partition, of the determined process to the physical memory.

With reference to the first possible implementation manner of the first aspect, in a second possible implementation manner, the method further includes:
when it is determined that the data volume, in the swap partition of the operating system, of the determined process is larger than the current free memory capacity of the physical memory of the operating system, terminating swap-in processing of the data, in the swap partition of the operating system, of the determined process.

With reference to the first aspect, in a third possible implementation manner, if it is determined that there are at least two processes in which data needs to be swapped in to the physical memory of the operating system, swapping in all data, in the swap partition of the operating system, of the determined processes to the physical memory of the operating system according to the current free memory capacity of the physical memory of the operating system includes:
sequentially selecting each process from the determined processes, and determining whether a data volume, in the swap partition, of a currently selected process is not larger than the current free memory capacity of the physical memory;
when it is determined that the data volume, in the swap partition, of the currently selected process is not larger than the current free memory capacity of the physical memory, swapping in all data, in the swap partition, of the currently selected process to the physical memory; and
when it is determined that the data volume, in the swap partition, of the currently selected process is larger than the current free memory capacity of the physical memory, terminating swap-in processing of the data, in the swap partition, of the currently selected process.

With reference to the first aspect, in a fourth possible implementation manner, if it is determined that there are at least two processes in which data needs to be swapped in to the physical memory of the operating system, and the instruction command further carries information about a priority corresponding to each process identifier, swapping in all data, in the swap partition of the operating system, of the determined processes to the physical memory of the operating system according to the current free memory capacity of the physical memory of the operating system includes:
sequentially selecting each process from the determined processes in a sequence from high to low according to the priorities corresponding to the process identifiers, and determining whether a data volume, in the swap partition, of a currently selected process is not larger than the current free memory capacity of the physical memory;
when it is determined that the data volume, in the swap partition, of the currently selected process is not larger than the current free memory capacity of the physical memory, swapping in all data, in the swap partition, of the currently selected process to the physical memory; and
when it is determined that the data volume, in the swap partition, of the currently selected process is larger than the current free memory capacity of the physical memory, terminating swap-in processing of the data, in the swap partition, of the currently selected process.

With reference to the first aspect, in a fifth possible implementation manner, if it is determined that there are at least two processes in which data needs to be swapped in to the physical memory of the operating system, swapping in all data, in the swap partition of the operating system, of the determined processes to the physical memory of the operating system according to the current free memory capacity of the physical memory of the operating system includes:
when it is determined that a total data volume, in the swap partition of the operating system, of the determined processes is not larger than the current free memory capacity of the physical memory of the operating system, swapping in all the data, in the swap partition, of the determined processes to the physical memory.

With reference to the fifth possible implementation manner of the first aspect, in a sixth possible implementation manner, the method further includes:
when it is determined that the total data volume, in the swap partition of the operating system, of the determined processes is larger than the current free memory capacity of the physical memory, terminating swap-in processing of the data, in the swap partition of the operating system, of the determined processes.

A second aspect provides an apparatus for swapping in data to a memory, where the apparatus includes:
a determining module, configured to determine, according to a received instruction command, a process in which data needs to be swapped in to a physical memory of an operating system, where the instruction command carries at least one process identifier that is used to indicate the process in which data needs to be swapped in to the physical memory of the operating system; and
a processing module, configured to swap in all data, in a swap partition of the operating system, of at least one process of the determined processes to the physical memory of the operating system according to a current free memory capacity of the physical memory of the operating system.

According to the apparatus provided in the embodiments of the present invention, data, in a swap partition, of a process that needs to be accessed by a user can be actively swapped in to a physical memory at a time according to a user requirement. Because a speed of performing read and write operations on data in the physical memory is much higher than a speed of performing read and write operations on data in the swap partition, a running speed of the process is effectively increased, and so a running speed of an operating system is also increased.

With reference to the second aspect, in a first possible implementation manner, if it is determined that there is one process in which data needs to be swapped in to the physical memory of the operating system, the processing module is specifically configured to:
when it is determined that a data volume, in the swap partition of the operating system, of the determined process is not larger than the current free memory capacity of the physical memory of the operating system, swap in all data, in the swap partition, of the determined process to the physical memory.

With reference to the first possible implementation manner of the second aspect, in a second possible implementation manner, the processing module is further configured to:
when it is determined that the data volume, in the swap partition of the operating system, of the determined process is larger than the current free memory capacity of the physical memory of the operating system, terminate swap-in processing of the data, in the swap partition of the operating system, of the determined process.

With reference to the second aspect, in a third possible implementation manner, if it is determined that there are at least two processes in which data needs to be swapped in to the physical memory of the operating system, the processing module is specifically configured to:
sequentially select each process from the determined processes, and determine whether a data volume, in the swap partition, of a currently selected process is not larger than the current free memory capacity of the physical memory; when it is determined that the data volume, in the swap partition, of the currently selected process is not larger than the current free memory capacity of the physical memory, swap in all data, in the swap partition, of the currently selected process to the physical memory; and when it is determined that the data volume, in the swap partition, of the currently selected process is larger than the current free memory capacity of the physical memory, terminate swap-in processing of the data, in the swap partition, of the currently selected process.

With reference to the second aspect, in a fourth possible implementation manner, if it is determined that there are at least two processes in which data needs to be swapped in to the physical memory of the operating system, and the instruction command further carries information about a priority corresponding to each process identifier, the processing module is further configured to:
sequentially select each process from the determined processes in a sequence from high to low according to the priorities corresponding to the process identifiers, and determine whether a data volume, in the swap partition, of a currently selected process is not larger than the current free memory capacity of the physical memory; when it is determined that the data volume, in the swap partition, of the currently selected process is not larger than the current free memory capacity of the physical memory, swap in all data, in the swap partition, of the currently selected process to the physical memory; and when it is determined that the data volume, in the swap partition, of the currently selected process is larger than the current free memory capacity of the physical memory, terminate swap-in processing of the data, in the swap partition, of the currently selected process.

With reference to the second aspect, in a fifth possible implementation manner, if it is determined that there are at least two processes in which data needs to be swapped in to the physical memory of the operating system, the processing module is specifically configured to:
when it is determined that a total data volume, in the swap partition of the operating system, of the determined processes is not larger than the current free memory capacity of the physical memory of the operating system, swap in all data, in the swap partition, of the determined processes to the physical memory.

With reference to the fifth possible implementation manner of the second aspect, in a sixth possible implementation manner, the processing module is further configured to:
when it is determined that the total data volume, in the swap partition of the operating system, of the determined processes is larger than the current free memory capacity of the physical memory, terminate swap-in processing of the data, in the swap partition of the operating system, of the determined processes.

A third aspect provides a device with a function of swapping in data to a memory, where the device includes a user interface and an optional network interface, a processor connected to the user interface and the network interface by using a bus, and a memory separately connected to the user interface and the processor, where:
the memory stores at least an operating system and an application program, and further, the operating system further includes a swap partition and a physical memory;
the user interface is configured to receive an instruction command, where the instruction command carries at least one process identifier that is used to indicate a process in which data needs to be swapped in to the physical memory of the operating system; and
the processor is configured to determine, according to the instruction command, the process in which data needs to be swapped in to the physical memory, and swap in all data, in the swap partition, of at least one process of the determined processes to the physical memory according to a current free memory capacity of the physical memory.

According to the device provided in the embodiments of the present invention, data, in a swap partition, of a process that needs to be accessed by a user can be actively swapped in to a physical memory at a time according to a user requirement. Because a speed of performing read and write operations on data in the physical memory is much higher than a speed of performing read and write operations on data in the swap partition, a running speed of the process is effectively increased, and so a running speed of an operating system is also increased.

With reference to the third aspect, in a first possible implementation manner, if there is one process in which data needs to be swapped in to the physical memory and that is determined by the processor, the processor is specifically configured to:
when it is determined that a data volume, in the swap partition, of the determined process is not larger than the current free memory capacity of the physical memory, swap in all data, in the swap partition, of the determined process to the physical memory.

With reference to the first possible implementation manner of the third aspect, in a second possible implementation manner, the processor is further configured to: when it is determined that the data volume, in the swap partition, of the determined process is larger than the current free memory capacity of the physical memory, terminate swap-in processing of the data, in the swap partition, of the determined process.

With reference to the third aspect, in a third possible implementation manner, there are at least two processes in which data needs to be swapped in to the physical memory and that are determined by the processor, then the processor is specifically configured to:
sequentially select each process from the determined processes, and determine whether a data volume, in the swap partition, of a currently selected process is not larger than the current free memory capacity of the physical memory; when it is determined that the data volume, in the swap partition, of the currently selected process is not larger than the current free memory capacity of the physical memory, swap in all data, in the swap partition, of the currently selected process to the physical memory; and when it is determined that the data volume, in the swap partition, of the currently selected process is larger than the current free memory capacity of the physical memory, terminate swap-in processing of the data, in the swap partition, of the currently selected process.

With reference to the third aspect, in a fourth possible implementation manner, if the processor determines that there are at least two processes in which data needs to be swapped in to the physical memory, and the instruction command received by the user interface further carries information about a priority corresponding to each process identifier, the processing module is specifically configured to:
sequentially select each process from the determined processes in a sequence from high to low according to the priorities corresponding to the process identifiers, and determine whether a data volume, in the swap partition, of a currently selected process is not larger than the current free memory capacity of the physical memory; when it is determined that the data volume, in the swap partition, of the currently selected process is not larger than the current free memory capacity of the physical memory, swap in all data, in the swap partition, of the currently selected process to the physical memory; and when it is determined that the data volume, in the swap partition, of the currently selected process is larger than the current free memory capacity of the physical memory, terminate swap-in processing of the data, in the swap partition, of the currently selected process.

With reference to the third aspect, in a fifth possible implementation manner, if the processor determines that there are at least two processes in which data needs to be swapped in to the physical memory of the operating system, the processing module is specifically configured to:
when it is determined that a total data volume, in the swap partition, of the determined processes is not larger than the current free memory capacity of the physical memory, swap in all data, in the swap partition, of the determined processes to the physical memory.

With reference to the fifth possible implementation manner of the third aspect, in a sixth possible implementation manner, the processor is further configured to: when it is determined that the total data volume, in the swap partition, of the determined processes is larger than the current free memory capacity of the physical memory, terminate swap-in processing of the data, in the swap partition, of the determined processes.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic diagram of a method for swapping in data to a memory according to an embodiment of the present invention;
FIG. 2 is a schematic diagram of another method for swapping in data to a memory according to an embodiment of the present invention;
FIG. 3 is a schematic diagram of an apparatus for swapping in data to a memory according to an embodiment of the present invention; and
FIG. 4 is a schematic diagram of a device with a function of swapping in data to a memory according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

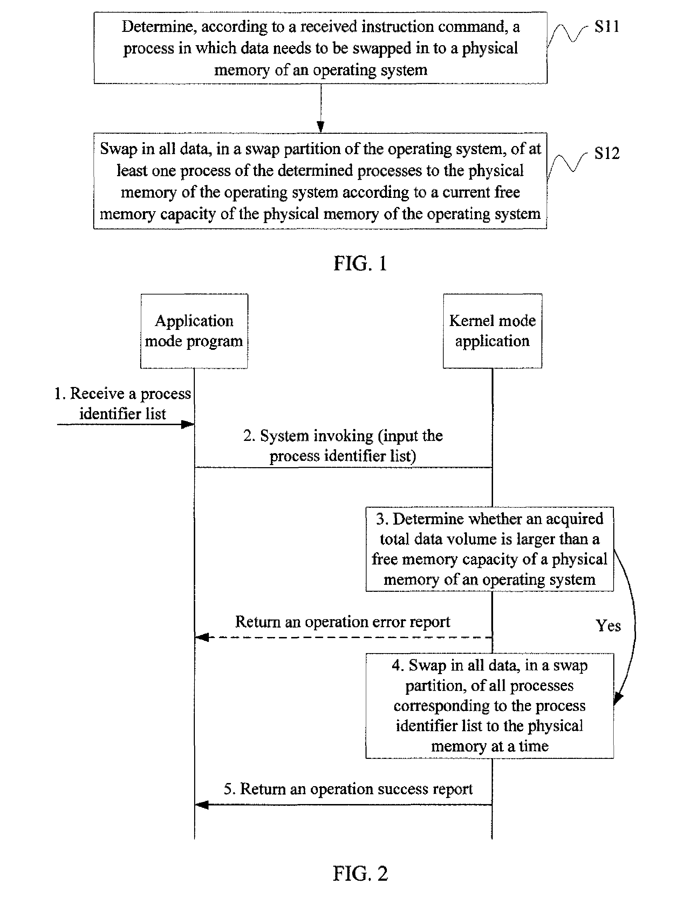

Referring to FIG. 1, an embodiment of the present invention provides a method for swapping in data to a memory. The method includes the following steps:

S11. Determine, according to a received instruction command, a process in which data needs to be swapped in to a physical memory of an operating system, where the instruction command carries at least one process identifier (Process IDentifier, PID) that is used to indicate the process in which data needs to be swapped in to the physical memory of the operating system.

Specifically, when a user determines that one or some processes are required to access data, to increase a running speed of the system, the user notifies, by using the instruction command, the operating system of a process identifier corresponding to at least one process in which data needs to be accessed. Correspondingly, the operating system determines, according to the received instruction command sent by the user, the at least one process in which data needs to be swapped in to the physical memory of the operating system.

In this manner, the at least one process identifier carried in the instruction command sent by the user exists in a form of a process identifier list.

S12. Swap in all data, in a swap partition of the operating system, of at least one process of the determined processes to the physical memory of the operating system according to a current free memory capacity of the physical memory of the operating system.

In this embodiment of the present invention, a process in which data needs to be swapped in to a physical memory of an operating system is determined according to a received instruction command; and all data, in a swap partition of the operating system, of at least one process of the determined processes is swapped in to the physical memory of the operating system according to a current free memory capacity of the physical memory of the operating system. Therefore, data, in the swap partition, of a process that needs to be accessed by a user can be actively swapped in to the physical memory at a time according to a user requirement. Because a speed of performing read and write operations on data in the physical memory is much higher than a speed of performing read and write operations on data in the swap partition, a running speed of the process is effectively increased, and so a running speed of the operating system is also increased.

The method for swapping in data to a memory provided in this embodiment of the present invention is applicable to various operating systems, such as an Android operating system and a Linux operating system; and the method for swapping in data to a memory provided in this embodiment of the present invention is also applicable to an electronic device with any one operating system, such as a mobile phone, a tablet computer, a desktop computer, a notebook computer, a television set, and a player.

During implementation, for the number of the processes in which data needs to be swapped in to the physical memory of the operating system and that are determined in step S11, there are two cases.

In the first case, there is one process in which data needs to be swapped in to the physical memory of the operating system and that is determined in step S11.

In this case, in step S12, swapping in all data, in the swap partition of the operating system, of the determined process to the physical memory of the operating system according to the current free memory capacity of the physical memory of the operating system includes:
when it is determined that a data volume, in the swap partition of the operating system, of the determined process is not larger than the current free memory capacity of the physical memory of the operating system, swapping in all data, in the swap partition of the operating system, of the determined process to the physical memory of the operating system.

Specifically, for the process in which data needs to be swapped in to the physical memory of the operating system and that is determined in step S11, whether the data volume, in the swap partition of the operating system, of the process is larger than the current free memory capacity of the physical memory of the operating system is determined; if not, all data, in the swap partition of the operating system, of the process is swapped in to the physical memory of the operating system.

Further, when it is determined that the data volume, in the swap partition of the operating system, of the determined process is larger than the current free memory capacity of the physical memory of the operating system, swap-in processing of the data, in the swap partition of the operating system, of the determined process, is terminated.

In the second case, there are at least two processes in which data needs to be swapped in to the physical memory of the operating system and that are determined in step S 11.

In this case, in step S12, swapping in all data, in the swap partition of the operating system, of the determined processes to the physical memory of the operating system according to the current free memory capacity of the physical memory of the operating system further includes the following three preferable implementation manners:

Manner 1: Swap-in processing is sequentially performed on each process determined in step S12, which is specifically:
sequentially selecting each process from the determined processes, and determining whether a data volume, in the swap partition of the operating system, of a currently selected process is not larger than the current free memory capacity of the physical memory of the operating system;
when it is determined that the data volume, in the swap partition of the operating system, of the currently selected process is not larger than the current free memory capacity of the physical memory of the operating system, swapping in all data, in the swap partition of the operating system, of the currently selected process to the physical memory of the operating system; and
when it is determined that the data volume, in the swap partition of the operating system, of the currently selected process is larger than the current free memory capacity of the physical memory of the operating system, terminating swap-in processing of the data, in the swap partition of the operating system, of the currently selected process.

A meaning of the sequentially selecting each process is that the foregoing determining step is performed on each process of the at least two determined processes, and corresponding processing is performed according to a result of the determining step. However, there is no sequence limitation on the "sequentially selecting", and a process selected each time may be any one process except a process that is already selected at a previous time.

During implementation, the swap-in processing may be performed according to a size of a data volume of each determined process in which data needs to be swapped in to the physical memory of the operating system, for example, data of a process with a largest (or smallest) data volume is first swapped in to the physical memory, and then data of a process with a second largest (or second smallest) data volume is swapped in to the physical memory until the current free memory capacity of the physical memory of the operating system is smaller than a data volume of each process in which swap-in needs to be performed subsequently or until swap-in processing on the last process in which swap-in needs to be performed is completed; and the swap-in processing may also be performed on a process that is randomly selected from at least one determined process in which data needs to be swapped in to the physical memory of the operating system until the current free memory capacity of the physical memory of the operating system is smaller than a data volume of each process in which swap-in needs to be performed subsequently or until the swap-in processing on the last process in which swap-in needs to be performed is completed.

Manner 2: If the instruction command received in step S11 further carries information about a priority corresponding to each process identifier, swap-in processing on each process determined in step S12 is sequentially performed in a sequence from high to low according to the priorities corresponding to the process identifiers, which is specifically:
sequentially selecting each process from the determined processes in the sequence from high to low according to the priorities corresponding to the process identifiers, and determining whether a data volume, in the swap partition of the operating system, of a currently selected process is not larger than the current free memory capacity of the physical memory of the operating system;
when it is determined that the data volume, in the swap partition of the operating system, of the currently selected process is not larger than the current free memory capacity of the physical memory of the operating system, swapping in all data, in the swap partition of the operating system, of the currently selected process to the physical memory of the operating system; and
when it is determined that the data volume, in the swap partition of the operating system, of the currently selected process is larger than the current free memory capacity of the physical memory of the operating system, terminating swap-in processing of the data, in the swap partition of the operating system, of the currently selected process.

Specifically, if the received instruction command further includes the information about the priorities corresponding to the process identifiers, whether a data volume, in the swap partition of the operating system, of a process of a highest priority among all determined processes is larger than the current free memory capacity of the physical memory of the operating system is determined; if yes, all data, in the swap partition of the operating system, of the process of the highest priority is swapped in to the physical memory of the operating system; and if no, swap-in processing on the process of the highest priority is terminated. Then, determining and corresponding processing are performed on a process of a second highest priority according to this step, and the determining and corresponding processing are performed repeatedly until processing on all processes is completed.

It should be noted that, the manner 1 is different from the manner 2. In the manner 1, there is no specific sequence when processes are sequentially selected, any one process may be selected each time, and which one is specifically selected may be determined according to a current situation; and in the manner 2, a process is selected according to a determined priority in the instruction command of the user, a process of a higher priority is first selected, and then a process of a lower priority is selected, that is, according to priorities determined by the user, it is ensured as far as possible that data corresponding to the process of the higher priority is first swapped in to the physical memory of the operating system.

Preferably, if the at least one process identifier carried in the instruction command sent by the user exists in the form of the process identifier list, the at least one process identifier in the process identifier list may be arranged in a sequence from high to low or from low to high according to priorities of processes corresponding to the process identifiers.

In the foregoing two preferable implementation manners, for each process of which a data volume in the swap partition of the operating system is not larger than the free memory capacity of the physical memory of the operating system, a one-off reading manner is used to swap in all data, in the swap partition of the operating system, of the process to the physical memory at a time. In an existing processing process of a page fault, each time only one logical page corresponding to an address accessed by the process is swapped in to the physical memory, where a data volume of one logical page is generally 4 k. It is assumed that 512 MB data of the process is in the swap partition of the operating system, when page fault processing is used, swapping in all data of the process to the physical memory requires 128000 (that is, 512000/4) times of disk read, time required for performing disk read once is generally several milliseconds, and total time required for using the page fault processing to swap in all the data of the process to the physical memory is hundreds of seconds. However, if the one-off reading manner provided in this embodiment of the present invention is used, time required for the 512 MB data is roughly tens of seconds. Therefore, the method, which is used in this embodiment of the present invention, of one-off active reading in a swap partition can remarkably increase a running speed of the process.

Manner 3: All data, in the swap partition of the operating system, of all processes determined in step S12 is swapped in to the physical memory of the operating system at a time, which is specifically:
when it is determined that a total data volume, in the swap partition of the operating system, of the determined processes is not larger than the current free memory capacity of the physical memory of the operating system, swapping in all data, in the swap partition of the operating system, of the determined processes to the physical memory of the operating system.

Specifically, whether the total data volume, in the swap partition of the operating system, of the determined processes is larger than the current free memory capacity of the physical memory of the operating system is determined, and when the total data volume, in the swap partition of the operating system, of the determined processes is not larger than the free memory capacity of the physical memory of the operating system, all data, in the swap partition of the operating system, of the determined processes is swapped in to the physical memory of the operating system at a time, that is, data, in the swap partition of the operating system, of all the determined processes is swapped in to the physical memory of the operating system at a time.

In this manner, the total data volume refers to a sum of a data volume, in the swap partition of the operating system, of each process determined in step S11.

Further, when it is determined that the total data volume, in the swap partition of the operating system, of the determined processes is larger than the free memory capacity of the physical memory, swap-in processing of the data, in the swap partition of the operating system, of the determined processes is terminated.

In this manner, for all processes determined in step S11, whether the total data volume, in the swap partition of the operating system, of all processes is larger than the free memory capacity of the physical memory is determined first, if yes, swap-in processing on all the determined processes is terminated; and if no, all the data, in the swap partition of the operating system, of all the determined processes is swapped in to the physical memory at a time.

In this manner, if the total data volume, in the swap partition of the operating system, of the determined processes is not larger than the free memory capacity of the physical memory, a one-off reading manner is used to swap in all the data, in the swap partition of the operating system, of the determined processes to the physical memory at a time, thereby increasing a running speed of the process.

The following describes in detail the method for swapping in data to a memory according to the embodiment of the present invention with reference to a specific embodiment.

Embodiment 1: Considering safety, in an operating system, two running modes are designed for programs: a user mode application (which is also called application mode program) and a kernel mode application. A common application program runs in an application mode, and some special programs (such as an application program with specific permission) and the operating system itself run in a kernel mode. The method for swapping in data to a memory provided in this embodiment, referring to FIG. 2, includes the following steps:

Step 1: An application mode program receives an instruction command that carries a process identifier list and is sent by a user.

Step 2: The application mode program instructs, by means of system invoking, a kernel mode application to swap in all data, in a swap partition of an operating system, of a process corresponding to each process identifier in the process identifier list to a physical memory of the operating system at a time, where the process identifier list includes at least one process identifier.

Step 3: The kernel mode application receives the process identifier list input by the application mode program, scans a kernel page table according to the process identifier list to acquire a total data volume, in the swap partition of the operating system, of the processes corresponding to the process identifiers in the process identifier list, and determines whether the acquired total data volume is larger than a free memory capacity of the physical memory of the operating system.

If yes, step 4 is performed.

If no, the kernel mode application returns an operation error report to the application mode program, and the application mode program stops swap-in processing on a currently processed process and a subsequent process after receiving the operation error report.

Step 4: The kernel mode application swaps in all data, in the swap partition of the operating system, of the processes corresponding to the process identifiers in the process identifier list to the physical memory at a time, and releases data, in the swap partition, which has been swapped in to the physical memory, and performs step 5.

Step 5: The kernel mode application returns an operation success report to the application mode program.

The processing process in the foregoing method may be implemented by using a software program, where the software program may be stored in a storage medium, and when the stored software program is invoked, the foregoing method steps are performed.

Based on a same inventive idea, an embodiment of the present invention further provides an apparatus for swapping in data to a memory. A problem solving principle of the apparatus is similar to that of the foregoing method for swapping in data to a memory, and therefore, for details about implementation of this apparatus, reference may be made to the implementation of the method, and repeated description is not provided herein again.

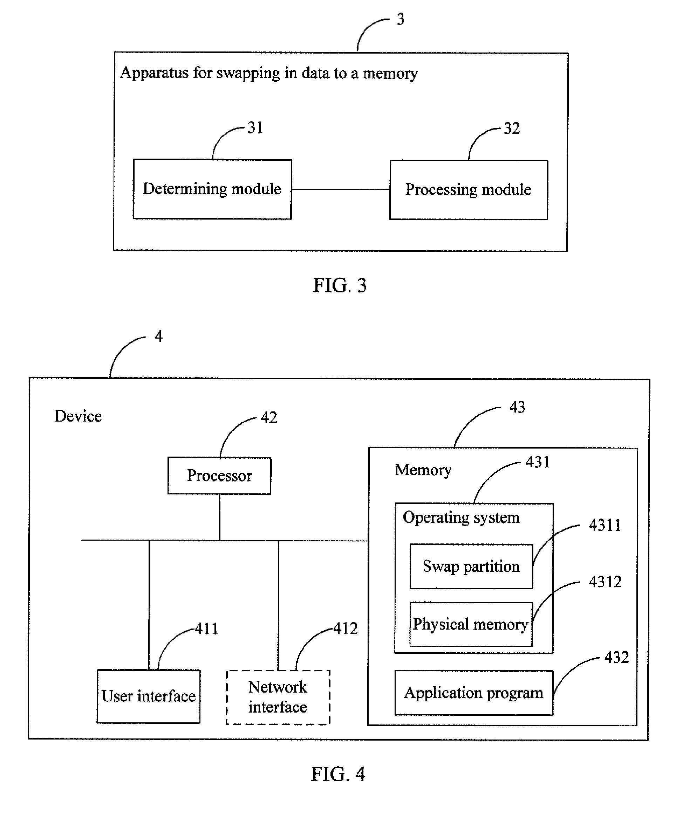

Referring to FIG. 3, an apparatus 3 for swapping in data to a memory provided in an embodiment of the present invention includes:
a determining module 31, configured to determine, according to a received instruction command, a process in which data needs to be swapped in to a physical memory of an operating system, where the instruction command carries at least one process identifier that is used to indicate the process in which data needs to be swapped in to the physical memory of the operating system; and
a processing module 32, configured to swap in all data, in a swap partition of the operating system, of at least one process of the determined processes to the physical memory of the operating system according to a current free memory capacity of the physical memory of the operating system.

According to the apparatus provided in this embodiment of the present invention, a process in which data needs to be swapped in to a physical memory of an operating system is determined according to a received instruction command; and all data, in a swap partition of the operating system, of at least one process of the determined processes is swapped in to the physical memory of the operating system according to a current free memory capacity of the physical memory of the operating system. Therefore, data, in the swap partition, of a process that needs to be accessed by a user can be actively swapped in to the physical memory at a time according to a user requirement. Because a speed of performing read and write operations on data in the physical memory is much higher than a speed of performing read and write operations on data in the swap partition, a running speed of the process is effectively increased, and so a running speed of the operating system is also increased.

The apparatus provided in this embodiment of the present invention is applicable to various operating systems, such as an Android operating system and a Linux operating system; and the method for swapping in data to a memory provided in this embodiment of the present invention is also applicable to an electronic device with any one operating system, such as a mobile phone, a tablet computer, a desktop computer, a notebook computer, a television set, and a player.

During implementation, for the number of the processes in which data needs to be swapped in to the physical memory of the operating system and that are determined by the determining module 31, there are two cases.

In the first case, there is one process in which data needs to be swapped in to the physical memory of the operating system and that is determined by the determining module 31.

In this case, the processing module 32 is specifically configured to:
when it is determined that a data volume, in the swap partition of the operating system, of the determined process is not larger than the current free memory capacity of the physical memory of the operating system, swap in all data, in the swap partition of the operating system, of the determined process to the physical memory of the operating system.

Specifically, for the process in which data needs to be swapped in to the physical memory of the operating system and that is determined by the determining module 31, whether the data volume, in the swap partition of the operating system, of the process is larger than the current free memory capacity of the physical memory of the operating system is determined; and if no, all the data, in the swap partition of the operating system, of the process is swapped in to the physical memory of the operating system.

In this manner, further, the processing module 32 is further configured to:
when it is determined that the data volume, in the swap partition of the operating system, of the determined process is larger than the current free memory capacity of the physical memory of the operating system, terminate swap-in processing of the data, in the swap partition of the operating system, of the determined process.

In the second case, there are at least two processes in which data needs to be swapped in to the physical memory of the operating system and that are determined by the determining module 31.

In this case, that the processing module 32 performs data swap-in processing further includes the following three preferable implementation manners:

Manner 1: The processing module 32 is specifically configured to:
sequentially select each process from the determined processes, and determine whether a data volume, in the swap partition, of a currently selected process is not larger than the current free memory capacity of the physical memory of the operating system; when it is determined that the data volume, in the swap partition of the operating system, of the currently selected process is not larger than the current free memory capacity of the physical memory of the operating system, swap in all data, in the swap partition of the operating system, of the currently selected process to the physical memory of the operating system; and when it is determined that the data volume, in the swap partition of the operating system, of the currently selected process is larger than the current free memory capacity of the physical memory of the operating system, terminate swap-in processing of the data, in the swap partition of the operating system, of the currently selected process.

Specifically, a process is selected from the determined processes, and whether a data volume, in the swap partition of the operating system, of the process is larger than the current free memory capacity of the physical memory of the operating system is determined; when the data volume, in the swap partition of the operating system, of the process is not larger than the free memory capacity of the physical memory, all data, in the swap partition of the operating system, of the process is swapped in to the physical memory at a time; and then a process is selected from remaining processes, and the foregoing determining process is repeated until the current free memory capacity of the physical memory of the operating system is smaller than a data volume of each process in which swap-in needs to be performed subsequently or until swap-in processing on the last process in which swap-in needs to be performed is completed.

A meaning of the sequentially selecting each process is that the foregoing determining step is performed on each process of the at least two determined processes, and corresponding processing is performed according to a result of the determining step. However, there is no sequence limitation on the "sequentially selecting", and a process selected each time may be any one process except a process that is already selected at a previous time.

During implementation, the processing module 32 may perform the swap-in processing according to a size of a data volume of each determined process in which data needs to be swapped in to the physical memory of the operating system, for example, data of a process with a largest (or smallest) data volume is first swapped in to the physical memory, and then, data of a process with a second largest (or second smallest) data volume is swapped in to the physical memory until the current free memory capacity of the physical memory of the operating system is smaller than the data volume of each process in which swap-in needs to be performed subsequently or until the swap-in processing on the last process in which swap-in needs to be performed is completed; and the swap-in processing may also be performed on a process that is randomly selected from at least one determined process in which data needs to be swapped in to the physical memory of the operating system until the current free memory capacity of the physical memory of the operating system is smaller than the data volume of each process in which swap-in needs to be performed subsequently or until the swap-in processing on the last process in which swap-in needs to be performed is completed.

Manner 2: If the determining module 31 determines that there are at least two processes in which data needs to be swapped in to the physical memory of the operating system, and the instruction command received by the determining module 31 further carries information about a priority corresponding to each process identifier, the processing module 32 is specifically configured to:
sequentially select each process from the determined processes in a sequence from high to low according to the priorities corresponding to the process identifiers, and determine whether a data volume, in the swap partition of the operating system, of a currently selected process is not larger than the current free memory capacity of the physical memory of the operating system; when it is determined that the data volume, in the swap partition of the operating system, of the currently selected process is not larger than the current free memory capacity of the physical memory of the operating system, swap in all data, in the swap partition of the operating system, of the currently selected process to the physical memory of the operating system; and when it is determined that the data volume, in the swap partition of the operating system, of the currently selected process is larger than the current free memory capacity of the physical memory of the operating system, terminate swap-in processing of the data, in the swap partition of the operating system, of the currently selected process.

It should be noted that, the manner 1 is different from the manner 2. In the manner 1, there is no specific sequence when processes are sequentially selected, any one process may be selected each time, and which one is specifically selected may be determined according to a current situation; and in the manner 2, a process is selected according to a determined priority in the instruction command, a process of a higher priority is first selected, and then a process of a lower priority is selected, that is, according to priorities determined by the user, it is ensured as far as possible that data corresponding to the process of the higher priority is first swapped in to the physical memory of the operating system.

Preferably, if the at least one process identifier carried in the instruction command sent by the user exists in a form of a process identifier list, process identifiers in the process identifier list may be arranged in a sequence from high to low or from low to high according to priorities of processes corresponding to the process identifiers.

Manner 3: The processing module 32 is specifically configured to:
when it is determined that a total data volume, in the swap partition of the operating system, of the determined processes is not larger than the current free memory capacity of the physical memory of the operating system, swap in all data, in the swap partition of the operating system, of the determined processes to the physical memory of the operating system.

Specifically, whether the total data volume, in the swap partition of the operating system, of the determined processes is larger than the current free memory capacity of the physical memory of the operating system is determined, and when the total data volume, in the swap partition of the operating system, of the determined processes is not larger than the free memory capacity of the physical memory of the operating system, all data, in the swap partition of the operating system, of the determined processes is swapped in to the physical memory of the operating system at a time, that is, data, in the swap partition of the operating system, of all the determined processes is swapped in to the physical memory of the operating system at a time.

In this manner, the total data volume refers to a sum of a data volume, in the swap partition of the operating system, of each process determined by the determining module 31.

Further, when determining that the total data volume, in the swap partition of the operating system, of the determined processes is larger than the current free memory capacity of the physical memory, the processing module 32 terminates swap-in processing of the data, in the swap partition of the operating system, of the determined processes.

The following describes a structure and a processing manner of a device with a function of swapping in data to a memory provided in an embodiment of the present invention with reference to a preferable hardware structure.

Referring to FIG. 4, a device 4 includes a user interface 411 and an optional network interface 412, a processor 42 connected to the user interface 411 and the network interface 412 by using a bus, and a memory 43 separately connected to the user interface 411 and the processor 42, where
the memory 43 stores at least an operating system 431 and an application program 432, and further, the operating system 431 further includes a swap partition 4311 and a physical memory 4312;
the user interface 411 is configured to receive an instruction command, where the instruction command carries at least one process identifier that is used to indicate a process in which data needs to be swapped in to a physical memory of an operating system; and
the processor 42 is configured to determine, according to the instruction command, a process in which data needs to be swapped in to the physical memory 4312, and swap in all data, in the swap partition 4311, of at least one process of the determined processes to the physical memory 4312 according to a current free memory capacity of the physical memory 4312.

During implementation, the user interface 411 may be a keyboard interface, a voice input interface, a touchscreen input interface, and the like. The network interface 412 may be a network adapter, and may be configured to communicate with another device.

According to the device provided in this embodiment of the present invention, a process in which data needs to be swapped in to a physical memory of an operating system is determined according to a received instruction command; and all data, in a swap partition of the operating system, of at least one process of the determined processes is swapped in to the physical memory of the operating system according to a current free memory capacity of the physical memory of the operating system. Therefore, data, in the swap partition, of a process that needs to be accessed by a user can be actively swapped in to the physical memory at a time according to a user requirement. Because a speed of performing read and write operations on data in the physical memory is much higher than a speed of performing read and write operations on data in the swap partition, a running speed of the process is effectively increased, and so a running speed of the operating system is also increased.

The device provided in this embodiment of the present invention may be an electronic device with any one operating system (such as an Android operating system and a Linux operating system), such as a mobile phone, a tablet computer, a desktop computer, a notebook computer, a television set, and a player.

During implementation, for the number of the processes in which data needs to be swapped in to the physical memory 4312 and that are determined by the processor 42, there are two cases.

In a first case, there is one process in which data needs to be swapped in to the physical memory 4312 and that is determined by the processor 42.

In this case, the processor 43 is specifically configured to: when it is determined that a data volume, in the swap partition 4311, of the determined process is not larger than the current free memory capacity of the physical memory 4312, swap in all data, in the swap partition 4311, of the determined process to the physical memory 4312.

Further, the processor 43 is further configured to: when it is determined that the data volume, in the swap partition 4311, of the determined process is larger than the current free memory capacity of the physical memory 4312, terminate swap-in processing of the data, in the swap partition 4311, of the determined process.

In a second case, there are at least two processes in which data needs to be swapped in to the physical memory 4312 and that are determined by the processor 43.

In this case, that the processor 43 performs data swap-in processing further includes the following three preferred implementation manners:

Manner 1: The processor 43 is specifically configured to:
sequentially select each process from the determined processes, and determine whether a data volume, in the swap partition 4311, of a currently selected process is not larger than the current free memory capacity of the physical memory 4312; when it is determined that the data volume, in the swap partition 4311, of the currently selected process is not larger than the current free memory capacity of the physical memory 4312, swap in all data, in the swap partition 4311, of the currently selected process to the physical memory 4312; and when it is determined that the data volume, in the swap partition 4311, of the currently selected process is larger than the current free memory capacity of the physical memory 4312, terminate swap-in processing of the data, in the swap partition 4311, of the currently selected process.

Manner 2: If the processor 43 determines that there are at least two processes in which data needs to be swapped in to the physical memory 4312, and the instruction command received by the user interface 411 further carries information about a priority corresponding to each process identifier, the processor 43 is specifically configured to:
sequentially select each process from the determined processes in a sequence from high to low according to the priorities corresponding to the process identifiers, and determine whether a data volume, in the swap partition 4311, of a currently selected process is not larger than the current free memory capacity of the physical memory 4312; when it is determined that the data volume, in the swap partition 4311, of the currently selected process is not larger than the current free memory capacity of the physical memory 4312, swap in all data, in the swap partition 4311, of the currently selected process to the physical memory 4312; and when it is determined that the data volume, in the swap partition 4311, of the currently selected process is larger than the current free memory capacity of the physical memory 4312, terminate swap-in processing of the data, in the swap partition 4311, of the currently selected process.

Preferably, if the at least one process identifier carried in the instruction command sent by the user exists in a form of a process identifier list, process identifiers in the process identifier list may be arranged in a sequence from high to low or from low to high according to priorities of processes corresponding to the process identifiers.

Manner 3: The processor 43 is specifically configured to:
when it is determined that a total data volume, in the swap partition 4311, of the determined processes is not larger than the current free memory capacity of the physical memory 4312, swap in all data, in the swap partition 4311, of the determined processes to the physical memory 4312.

In this manner, the total data volume refers to a sum of a data volume, in the swap partition 4311 of the operating system, of each process determined in step S11.

Further, when determining that the total data volume, in the swap partition 4311, of the determined processes is larger than the current free memory capacity of the physical memory 4312, the processor 43 terminates swap-in processing of the data, in the swap partition 4311, of the determined processes.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the other programmable device, thereby generating computer-implemented processing. Therefore, the instructions executed on the computer or the other programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

It is apparent that persons skilled in the art can make various modifications and variations to the present invention without departing from the spirit and scope of the present invention. The present invention is intended to cover these modifications and variations provided that they fall within the scope of protection defined by the following claims or their equivalent technologies.

## Claims

1. A method for swapping in data to a memory, wherein the method comprises:
determining, according to a received instruction command, a process in which data needs to be swapped in to a physical memory of an operating system, wherein the instruction command carries at least one process identifier that is used to indicate the process in which data needs to be swapped in to the physical memory of the operating system; and
swapping in all data, in a swap partition of the operating system, of at least one process of the determined processes to the physical memory of the operating system according to a current free memory capacity of the physical memory of the operating system.

2. The method according to claim 1, wherein if it is determined that there is one process in which data needs to be swapped in to the physical memory of the operating system, swapping in all data, in the swap partition of the operating system, of the determined process to the physical memory of the operating system according to the current free memory capacity of the physical memory of the operating system comprises:
when it is determined that a data volume, in the swap partition of the operating system, of the determined process is not larger than the current free memory capacity of the physical memory of the operating system, swapping in all the data, in the swap partition, of the determined process to the physical memory.

3. The method according to claim 2, wherein the method further comprises:
when it is determined that the data volume, in the swap partition of the operating system, of the determined process is larger than the current free memory capacity of the physical memory of the operating system, terminating swap-in processing of the data, in the swap partition of the operating system, of the determined process.

4. The method according to claim 1, wherein if it is determined that there are at least two processes in which data needs to be swapped in to the physical memory of the operating system, swapping in all data, in the swap partition of the operating system, of the determined processes to the physical memory of the operating system according to the current free memory capacity of the physical memory of the operating system comprises:
sequentially selecting each process from the determined processes, and determining whether a data volume, in the swap partition, of a currently selected process is not larger than the current free memory capacity of the physical memory;
when it is determined that the data volume, in the swap partition, of the currently selected process is not larger than the current free memory capacity of the physical memory, swapping in all data, in the swap partition, of the currently selected process to the physical memory; and
when it is determined that the data volume, in the swap partition, of the currently selected process is larger than the current free memory capacity of the physical memory, terminating swap-in processing of the data, in the swap partition, of the currently selected process.

5. The method according to claim 1, wherein if it is determined that there are at least two processes in which data needs to be swapped in to the physical memory of the operating system, and the instruction command further carries information about a priority corresponding to each process identifier, swapping in all data, in the swap partition of the operating system, of the determined processes to the physical memory of the operating system according to the current free memory capacity of the physical memory of the operating system comprises:
sequentially selecting each process from the determined processes in a sequence from high to low according to the priorities corresponding to the process identifiers, and determining whether a data volume, in the swap partition, of a currently selected process is not larger than the current free memory capacity of the physical memory;
when it is determined that the data volume, in the swap partition, of the currently selected process is not larger than the current free memory capacity of the physical memory, swapping in all data, in the swap partition, of the currently selected process to the physical memory; and
when it is determined that the data volume, in the swap partition, of the currently selected process is larger than the current free memory capacity of the physical memory, terminating swap-in processing of the data, in the swap partition, of the currently selected process.

6. The method according to claim 1, wherein if it is determined that there are at least two processes in which data needs to be swapped in to the physical memory of the operating system, swapping in all data, in the swap partition of the operating system, of the determined processes to the physical memory of the operating system according to the current free memory capacity of the physical memory of the operating system comprises:
when it is determined that a total data volume, in the swap partition of the operating system, of the determined processes is not larger than the current free memory capacity of the physical memory of the operating system, swapping in all the data, in the swap partition, of the determined processes to the physical memory.

7. The method according to claim 6, wherein the method further comprises:
when it is determined that the total data volume, in the swap partition of the operating system, of the determined processes is larger than the current free memory capacity of the physical memory, terminating swap-in processing of the data, in the swap partition of the operating system, of the determined processes.

8. An apparatus for swapping in data to a memory, wherein the apparatus comprises:
a determining module, configured to determine, according to a received instruction command, a process in which data needs to be swapped in to a physical memory of an operating system, wherein the instruction command carries at least one process identifier that is used to indicate the process in which data needs to be swapped in to the physical memory of the operating system; and
a processing module, configured to swap in all data, in a swap partition of the operating system, of at least one process of the determined processes to the physical memory of the operating system according to a current free memory capacity of the physical memory of the operating system.

9. The apparatus according to claim 8, wherein if it is determined that there is one process in which data needs to be swapped in to the physical memory of the operating system, the processing module is specifically configured to:
when it is determined that a data volume, in the swap partition of the operating system, of the determined process is not larger than the current free memory capacity of the physical memory of the operating system, swap in all data, in the swap partition, of the determined process to the physical memory.

10. The apparatus according to claim 9, wherein the processing module is further configured to:
when it is determined that the data volume, in the swap partition of the operating system, of the determined process is larger than the current free memory capacity of the physical memory of the operating system, terminate swap-in processing of the data, in the swap partition of the operating system, of the determined process.

11. The apparatus according to claim 8, wherein if it is determined that there are at least two processes in which data needs to be swapped in to the physical memory of the operating system, the processing module is specifically configured to:
sequentially select each process from the determined processes, and determine whether a data volume, in the swap partition, of a currently selected process is not larger than the current free memory capacity of the physical memory; when it is determined that the data volume, in the swap partition, of the currently selected process is not larger than the current free memory capacity of the physical memory, swap in all data, in the swap partition, of the currently selected process to the physical memory; and when it is determined that the data volume, in the swap partition, of the currently selected process is larger than the current free memory capacity of the physical memory, terminate swap-in processing of the data, in the swap partition, of the currently selected process.

12. The apparatus according to claim 8, wherein if it is determined that there are at least two processes in which data needs to be swapped in to the physical memory of the operating system, and the instruction command further carries information about a priority corresponding to each process identifier, the processing module is further configured to:
sequentially select each process from the determined processes in a sequence from high to low according to the priorities corresponding to the process identifiers, and determine whether a data volume, in the swap partition, of a currently selected process is not larger than the current free memory capacity of the physical memory; when it is determined that the data volume, in the swap partition, of the currently selected process is not larger than the current free memory capacity of the physical memory, swap in all data, in the swap partition, of the currently selected process to the physical memory; and when it is determined that the data volume, in the swap partition, of the currently selected process is larger than the current free memory capacity of the physical memory, terminate swap-in processing of the data, in the swap partition, of the currently selected process.

13. The apparatus according to claim 8, wherein if it is determined that there are at least two processes in which data needs to be swapped in to the physical memory of the operating system, the processing module is specifically configured to:
when it is determined that a total data volume, in the swap partition of the operating system, of the determined processes is not larger than the current free memory capacity of the physical memory of the operating system, swap in all data, in the swap partition, of the determined processes to the physical memory.

14. The apparatus according to claim 13, wherein the processing module is further configured to:
when it is determined that the total data volume, in the swap partition of the operating system, of the determined processes is larger than the current free memory capacity of the physical memory, terminate swap-in processing of the data, in the swap partition of the operating system, of the determined processes.
